(19) **Europäisches Patentamt**
**European Patent Office**
**Office européen des brevets**

(11) **EP 1 494 004 B1**

(12) **EUROPÄISCHE PATENTSCHRIFT**

(45) Veröffentlichungstag und Bekanntmachung des Hinweises auf die Patenterteilung:
**09.03.2011 Patentblatt 2011/10**

(51) Int Cl.:
***G01L 13/02*** *(2006.01)* ***G01L 19/04*** *(2006.01)*

(21) Anmeldenummer: **03015055.1**

(22) Anmeldetag: **03.07.2003**

(54) **Differenzdrucksensor**

Differential pressure sensor

Capteur de pression differentielle

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**05.01.2005 Patentblatt 2005/01**

(73) Patentinhaber: **GRUNDFOS A/S**
**DK-8850 Bjerringbro (DK)**

(72) Erfinder:
• **Krog, Jens Peter**
**8860 Ulstrup (DK)**

• **Pedersen, Casper**
**2100 Koobenhavn (DK)**
• **Christensen, Carsten**
**2880 Bagsvaerd (DK)**

(74) Vertreter: **Vollmann, Heiko et al**
**Vollmann & Hemmer**
**Patentanwälte**
**Wallstrasse 33a**
**23560 Lübeck (DE)**

(56) Entgegenhaltungen:
**EP-A- 0 083 496     DE-A- 19 701 055**
**US-A- 4 790 192**

EP 1 494 004 B1

**Beschreibung**

Die Erfindung betrifft einen Differenzdrucksensor gemäß den im Oberbegriff des Anspruchs 1 angegebenen Merkmalen.

Derartige Differenzdrucksensoren zählen zum Stand der Technik und sind aus einem Halbleitersubstrat gebildet, das in einem inneren Bereich zu einer Membran ausgedünnt ist. In diesem inneren Bereich sind vier Messwiderstände ausgebildet, die zu einer Messbrücke geschaltet sind, so dass bei Verformung der Membran, wie sie durch Druckbeaufschlagung erfolgt, unter Ausnutzung des piezoresistiven Effekts der zu beiden Seiten der Membran anliegende Druck in Form des Differenzdrucks ermittelt werden kann. Nach diesem Prinzip arbeiten sowohl Differenzdrucksensoren als auch einfache Drucksensoren bei denen zu einer Seite der Membran der Atmosphärendruck ansteht. Ein solcher Halbleiterdrucksensor ist beispielsweise aus DE 197 01 055 A1 bekannt.

Da sich die Kennlinie des Drucksensors temperaturbedingt ändert, zählt es zum Stand der Technik, neben den eigentlichen auf der Membran ausgebildeten Messwiderständen im Bereich neben der Membran so genannte Kompensationswiderstände anzuordnen, die so dimensioniert sind, dass ihre piezoresistiven Koeffizienten betragsmäßig gleich sind. Die Widerstände sind in Reihe geschaltet und so angeordnet, dass sich Ihre temperaturbedingten Änderungen kompensieren.

Aus EP 0 083 496 B1 zählt es darüber hinaus zum Stand der Technik, die Messwiderstände und Kompensationswiderstände jeweils parallel zueinander anzuordnen und zu Messbrücken zu verschalten um auf diese Weise temperaturbedingte Messfehler zu kompensieren. Darüber hinaus werden dort auch druckniveaubedingte Messunterschiede mit der Schaltungsanordnung kompensiert. Allerdings liegen die Kompensationswiderstände bei der aus EP 0 083 496 B 1 bekannten Anordnung außerhalb des Membranbereichs, und zwar dort, wo das Halbleitersubstrat durch ein senkrecht dazu aufgebrachtes Glasrohr als praktisch starr anzusehen ist.

Sowohl der aus DE 197 01 055 A1 als auch der aus EP 0 083 496 B1 bekannte Sensor können als Differenzdrucksensor eingesetzt werden, sind jedoch praktisch für eine Druckmessung gegenüber dem einseitig an der Membran anliegenden Atmosphärendruck vorgesehen und somit nicht geeignet einen davon abweichenden Differenzdruck zu messen.

Zur Steuerung von Heizungsumwälzpumpen zählt es zum Stand der Technik, einen Differenzdrucksensor in den Heizmittelkreislauf einzusetzen, um auf diese Weise den Lastzustand der Heizungsanlage zu erfassen und die Heizungsumwälzpumpe entsprechend anzusteuern. Dabei ist der Differenzdruck ein Maß für die Stellung der Thermostatventile und damit für den Wärmebedarf der Anlage. Je nach Einbaulage und Ausbildung der Heizung unterscheidet sich der im Bereich der Pumpe anstehende Systemdruck ganz erheblich, obgleich die zu erfassenden Differenzdrücke etwa auf gleichem Niveau liegen.

Insbesondere bei dem vorgenannten Anwendungsfall der Heizungsumwälzpumpen ist es erstrebenswert, neben dem Differenzdruck auch einen Systemdruck zu erfassen, da dieser über den Füllzustand der Heizungsanlage Rückschlüsse erlaubt, so dass z.B. ein Trockenlaufen der Pumpe verhindert werden kann.

Der vorliegenden Erfindung liegt daher die Aufgabe zugrunde, einen gattungsgemäßen Differenzdrucksensor so auszubilden, dass auf möglichst einfache Weise ein weiterer Differenzdruck erfasst werden kann, insbesondere eine Absolutdruckerfassung möglich ist, also eine Druckerfassung gegenüber dem Umgebungsdruck.

Diese Aufgabe wird gemäß der Erfindung durch die Anspruch 1 angegebenen Merkmale gelöst. Vorteilhafte Ausgestaltungen der Erfindung sind in den Unteransprüchen, der nachfolgenden Beschreibung und der Zeichnung angegeben.

Grundgedanke der vorliegenden Erfindung ist es, bei einem gattungsgemäßen Differenzdrucksensor das an der zweiten Messbrücke anliegende Spannungssignal auszunutzen um den zu einer Seite der Membran anliegenden Druck im Verhältnis zu dem an einer Stirnseite des Trägers anliegenden Druck, beispielsweise dem Atmosphärendruck, zu bestimmen.

Der Differenzdrucksensor gemäß der Erfindung besteht aus einem Träger, in dessen inneren Bereich eine Membran angeordnet ist, die beidseitig druckbeaufschlagbar ist. Der Träger ist durch ein Halbleitersubstrat gebildet, das in einem inneren Bereich zu einer Membran ausgedünnt ist. Innerhalb der Membran sind Messwiderstände zur Erfassung des an der Membran anliegenden Differenzdrucks vorgesehen. Darüber hinaus sind am Träger bzw. Halbleitersubstrat Kompensationswiderstände ausgebildet, die mit den Messwiderständen verschaltet sind, wobei die Messwiderstände zu einer ersten Messbrücke und die Kompensationswiderstände zu einer zweiten Messbrücke geschaltet sind. Anhand der an der zweiten Messbrücke anliegenden Spannung sowie der an der ersten Messbrücke anliegenden Spannung wird gemäß der Erfindung einerseits der Differenzdruck zu beiden Seiten der Membran und andererseits der Differenzdruck zwischen einer Seite der Membran und einer Stirnseite des Trägers bzw. des Halbleitersubstrats bestimmt.

Damit sich der Träger bzw. das Halbleitersubstrat entsprechend dem anliegenden Drücken möglichst frei verformen kann, ist es zweckmäßig, dieses zweiseitig elastisch einzuspannen, vorzugsweise mittels zweier O-Ringe, welche gleichzeitig für die Abdichtung sorgen.

Um den Absolutdruck, der zu einer Seite der Membran anliegt, messen zu können, ist es erforderlich, das Halbleitersubstrat an mindestens einer Seite mit dem Umgebungsdruck zu beaufschlagen. Dies kann gemäß der Erfindung vorteilhaft außerhalb der Einspannung, vorzugsweise an einer Stirnseite des Substrats erfolgen. Hierdurch ergeben sich entsprechende Flächenabschnitte quer zur Auslenkrichtung der Membran, an denen einerseits der zu messende Absolutdruck und andererseits der Umgebungsdruck anliegen.

Die Kompensationswiderstände können bei dem erfindungsgemäßen Differenzdrucksensor entweder, wie es an sich auch aus dem Stand der Technik bekannt ist, neben der Membran jedoch innerhalb der Einspannung angeordnet sein. Gemäß der Erfindung können die Kompensationswiderstände aber auch auf der Membran selbst angeordnet sein. Hierdurch kann die Einspannung des Substrats näher an der Membran erfolgen, was zu einer höheren Messgenauigkeit bei kleineren Systemdrücken und zu einer kleinen Baugröße führt. In einer Weiterbildung der Erfindung ist darüber hinaus vorgesehen, die Kompensationswiderstände nicht nur außerhalb der Membran, sondern auch außerhalb der Einspannung, also dort vorzusehen, wo lediglich der Atmosphärendruck und nicht einer der Drücke anliegt, von denen der Differenzdruck zu bestimmen ist.

Die Erfassung des Absolutdrucks erfolgt gemäß der Erfindung mittels der zweiten Messbrücke, welche aus den Kompensationswiderständen gebildet ist. Für diese Messung können wiederum die auf der Membran befindlichen Messwiderstände des Differenzdrucksensors als Kompensationswiderstände dienen, beispielsweise um die temperaturabhängige Nullpunktdrift zu kompensieren wie weiter unten in Gleichung (2) in den letzten beiden Termen durch den Druck $P_d$ angegeben ist.

Gemäß der Erfindung wird der Absolutdruck mittels der Kompensationswiderstände des Differenzdrucksensors sensorisch erfasst. Um das bzw. die entsprechenden Spannungssignale aufzubereiten und in ein Signal umzusetzen, welches eine Anzeige steuert, welche den Absolutdruck anzeigt, ist gemäß der Erfindung eine elektronische Schaltung vorgesehen, welche mit den Ausgangsspannungen beaufschlagt wird und die einen Datenausgang oder ein Anschluss für eine Absolutdruckanzeige aufweist. Eine solche elektronische Schaltung kann typischerweise ein Mikroprozessor sein, dann ist der Datenausgang zweckmäßigerweise ein digitaler zur Ansteuerung einer entsprechenden Digitalanzeige oder zur Übergabe der Daten an eine Datenverarbeitungsanlage.

Bei Einsatz eines solchen Differenzdrucksensors in einer Heizungsumwälzpumpe, die frequensumrichtergesteuert ist, kann in besonders kostengünstiger Weise der frequenzumrichterseitig ohnehin vorhandene Mikroprozessor für diese Aufgabe herangezogen werden. Alternativ können gemäß der Erfindung die an den Messbrücken anliegenden Spannungen auch mittels einer vergleichsweise kostengünstigen analogen Schaltung verarbeitet werden, deren Ausgang ein Spannungssignal abgibt, welches eine Analoganzeige, typischerweise ein Zeigerinstrument, ansteuert.

Gemäß der Erfindung wird vorteilhaft der Absolutdruck zu der Seite des Substrats erfasst, an welcher dieses zur Bildung der Membran ausgedünnt ist.

Das Substrat ist ein im Wesentlichen flächiges Bauteil vergleichsweise geringer Dicke. Um insbesondere die Absolutdruckmessung gemäß der Erfindung messtechnisch einfach realisieren zu können, ist es zweckmäßig, das Verhältnis zwischen Substratfläche und Membranfläche zwischen 3 und 30 vorzugsweise im Bereich von etwa 16, zu wählen.

Insbesondere für die Absolutdruckmessung sind auch die Dickenverhältnisse zwischen dem Substrat und dem ausgedünnten Bereich, der Membran wesentlich. Hier wird vorteilhaft ein Dickenverhältnis zwischen der Dicke des Substrats und der Dicke der Membran gewählt, welches zwischen 10 und 200 vorzugsweise etwa 25 beträgt.

Der Messbereich bzw. die Messgenauigkeit des erfindungsgemäßen Differenzdrucksensors kann insbesondere hinsichtlich des Weiteren zu bestimmenden Differenzdrucks dadurch erhöht werden, dass die Membran profiliert oder mit unterschiedlicher Dicke ausgebildet wird.

Der erfindungsgemäße Differenzdrucksensor ist insbesondere vorteilhaft in einem Heizungsumwälzpumpenaggregat integriert, kann jedoch in anderen Anwendungen eingesetzt werden, wo ein zwischen zwei Fluiden anliegender Differenzdruck sowie einseitig auch ein Absolutdruck gegenüber dem Atmosphärendruck oder einem dritten (nicht Atmosphären-) Druck zu bestimmen ist.

Die Erfindung ist nachfolgend anhand eines in der Zeichnung dargestellten Ausführungsbeispiels näher erläutert. Es zeigen:

Fig. 1    in schematischer vergrößerter Darstellung einen Drucksensor gemäß der Erfindung im Schnitt,

Fig. 2    eine Draufsicht auf das den eigentlichen Sensor bildende Substrat,

Fig. 3    ein Schaltbild, das die elektrische Verschaltung der Messund Kompensationswiderstände zeigt und

Fig. 4    ein Blockschaltbild, welches die digitale Signalweiterverarbeitung veranschaulicht.

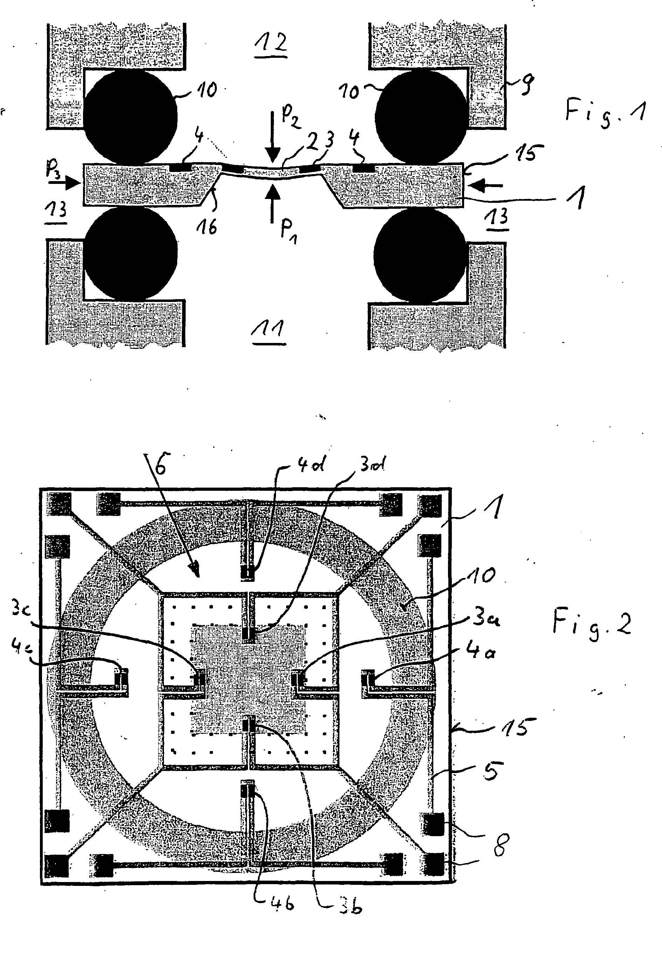

Der anhand der Figuren 1 und 2 dargestellte Differenzdrucksensor besteht aus einem im Wesentlichen flächig ausgebildeten Halbleitersubstrat 1, das in einem mittleren Bereich einseitig zu einer Membran 2 ausgedünnt ist. Im Bereich der Membran 2 sind vier Messwiderstände 3a bis 3d in an sich bekannter Weise ausgebildet. Unmittelbar neben der Membran 2 sind auf der gleichen Seite des Substrats vier weitere Widerstände in Form von Kompensationswiderständen 4a bis 4d ausgebildet. Die Anordnung der Widerstände 3, 4 auf dem Substrat 1 ergibt sich im Einzelnen aus Fig. 2. Danach sind die Widerstände 3, 4 jeweils kreuzförmig angeordnet, wobei jedem Messwiderstand 3 ein Kompensationswiderstand 4 zugeordnet ist und der Kompensationswiderstand in einer Richtung parallel zum Messwiderstand verläuft. Die Messwiderstände 3 zueinander und die Kompensationswiderstände 4 zueinander sind jeweils parallel gerichtet angeordnet, d.h., alle Widerstände 3, 4 sind in gleicher Richtung angeordnet.

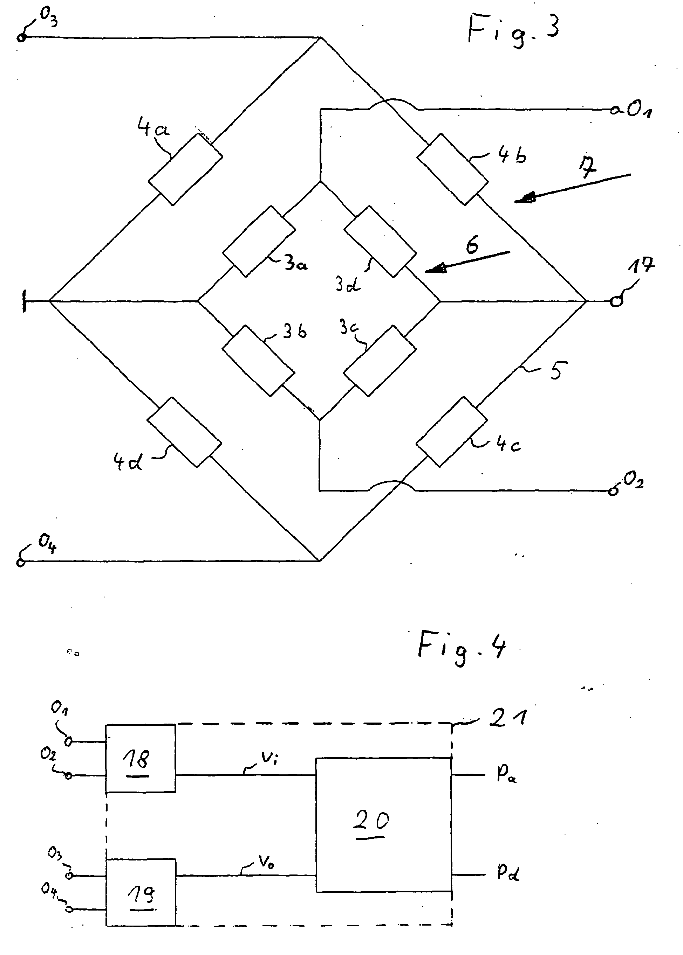

Die Widerstände 3a bis 3d einerseits sowie 4a bis 4d andererseits sind über Leiterbahnen 5 jeweils zu einer Messbrücke miteinander verbunden, und zwar die Messwiderstände 3 zu einer ersten Messbrücke 6 und die Kompensationswiderstände 4 zu einer zweiten Messbrücke 7. Während die Verschaltung der ersten Messbrücke 6 vollständig auf dem Substrat 1 erfolgt, ist für die Verschaltung der zweiten Messbrücke 7 zusätzlich noch eine Schaltung außerhalb des Substrats erforderlich, so dass sich ein Schaltbild ergibt, wie es in Fig. 3 dargestellt ist. Im Randbereich des Substrats sind die Leiterbahnen 5 mit Aluminiumkontakten 8 versehen, wo eine elektrische Leitung durch Schweißen anschließbar ist.

Das Substrat ist innerhalb eines hier nicht im Einzelnen dargestellten Sensorgehäuses 9 gelagert, das beispielsweise Teil eines Pumpenaggregats, eines anderen Aggregats oder gesondert ausgebildet sein kann. Innerhalb des Sensorgehäuses 9 ist das Substrat 1 mittels zweier O-Ringe 10 elastisch und dicht gegenüber dem Gehäuse 9 eingespannt. Das Sensorgehäuse 9 weist mindestens 3 Öffnungen auf, und zwar eine erste Öffnung 11, über das ein Fluid mit einem Druck $P_i$ zuführbar ist, eine zweite Öffnung 12, über das ein Fluid mit einem Druck $P_2$ zuführbar ist und eine dritte Öffnung 13, über das ein Fluid mit einem Druck $P_3$ zuführbar ist. Die Öffnungen 11 und 12 sind an sich bekannter Weise wie bei Differenzdrucksensoren dieser Art üblich ausgebildet, wobei der Druck $P_1$ an dem ausgedünnten Teil des Substrats 1 an der Membran 2 ansteht wohingegen der Druck $P_2$ an der anderen Seite entgegengerichtet ansteht, nämlich auf der Seite, auf der auch die Widerstände 3 und 4 ausgebildet sind. Der Druck $P_3$ steht seitlich an. Da bei dem beschriebenen Differenzdrucksensor der Druck $P_i$ als Absolutdruck gemessen werden soll, ist $P_3$ der atmosphärische Druck zu berücksichtigen. Die Öffnung 13 des Sensorsgehäuses 9 ist daher so angeordnet, dass eine Kanalverbindung zur Außenatmosphäre besteht.

Der so ausgebildete Sensor ist zum einen in an sich bekannter Weise dazu ausgelegt, den Differenzdruck $P_1$ minus $P_2$ zu ermitteln' und darüber hinaus geeignet, auch den Absolutdruck von $P_1$ gegenüber dem atmosphärischen Druck $P_3$ zu erfassen. Hierzu werden die senkrecht zur Membran 2 gebildeten Flächenanteile des Substrats 1 ausgenutzt, nämlich die äußeren Stirnseiten 15 des Substrats 1 sowie die schräg verlaufenden inneren Stirnseiten 16 des Substrats, dort wo das Substrat 1 zur Membran 2 hin ausgedünnt ist. Die quer zur Membran 2 gerichteten Anteile des Drucks $P_1$ wirken entgegen dem von außen auf die Stirnseiten 15 wirkenden atmosphärischen Drucks $P_3$. Auf Grund der elastischen Einspannung der Membran erfolgt somit auch eine Verformung in Abhängigkeit der anliegenden Drücke $P_1$ und $P_3$.

Die elektrische Verschaltung der Widerstände 3a bis 3d und 4a bis 4d ergibt sich im Einzelnen aus Fig. 3. Wie diese Fig. verdeutlicht, ist die erste Messbrücke 6 an den Anschlüssen $O_1$ und $O_2$ abgreifbar, wobei die zweite Messbrücke 7 an den Anschlüssen $O_3$ und $O_4$ abgreifbar ist. Sämtliche Widerstände 3, 4 sind jeweils paarweise an eine Stromquelle 17 angeschlossen, welche die Messbrücken 6 und 7 mit einem konstanten Strom I beaufschlagt. An den Anschlüssen $O_1$ bis $O_4$ erfolgt dann eine Spannungsmessung, so dass insgesamt vier Spannungen $O_1$ bis $O_4$ zu ermitteln sind. Die Ermittlung des Differenzdrucks. anhand dieser Schaltung zählt zum Stand der Technik und wird daher hier nicht mehr im Einzelnen beschrieben. Es wird in diesem Zusammenhang insbesondere auf den einleitend angegebenen Stand der Technik verwiesen.

Wie Fig. 4 verdeutlicht, werden die an den Messbrücken 6, 7 abgreifbaren Spannungen $O_1$ und $O_2$ sowie $O_3$ und $O_4$ subtraktiv miteinander verknüpft. Diese subtraktiven Verknüpfungen sind in dem Blockschaltbild gemäß Fig. 4 mit 18 bzw. 19 gekennzeichnet und verknüpfen die Spannungen $O_1$ bis $O_4$ wie folg:

$$O_2 - O_1 = V_i$$

$$O_4 - O_3 = V_o$$

wobei $V_i$ eine Spannung der inneren Messbrücke 6 und $V_o$ eine Spannung der äußeren Messbrücke 7 darstellt. Diese Spannungen $V_i$ bzw. $V_o$ stehen mit dem zu ermittelnden Differenzdruck $P_d$ und mit dem zu ermittelnden Absolutdruck $P_a$ in folgenden mathematischen Zusammenhang:

$$V_i = k_1 \cdot I_1 \cdot P_d + I_1 \cdot k_2 + I_1 \cdot k_3 \cdot P_a + k_4 \cdot I_1 \cdot P_a \cdot P_d \qquad (1)$$

$$V_o = k_5 \cdot I_2 \cdot P_a + I_2 \cdot k_6 + I_2 \cdot k_7 \cdot P_d + k_8 \cdot I_2 \cdot P_a \cdot P_d \qquad (2)$$

wobei $I_1$ und $I_2$ der durch die Brücken 6 und 7 fließende Strom ist und $k_1$ bis $k_8$ Konstanten sind, die sensorspezifisch und empirisch ermittelbar sind. Diese Konstanten werden fabrikmäßig nach Herstellung des Sensors in einer Art Kalibrierungsprozess ermittelt.

Im vorstehend beschriebenen Ausführungsbeispiel sind $I_1$ und $I_2$ gleich, da beide Messbrücken 6, 7 mit demselben Strom I beaufschlagt werden. Es kann jedoch zweckmäßig sein, zur Verbesserung der Messgenauigkeit die Messbrücken 6 und 7 mit unterschiedlichen Strömen zu beaufschlagen, dann sind diese unterschiedlichen Ströme $I_1$ und $I_2$ auch rechnerisch zu berücksichtigen

Anhand der vorstehenden Gleichungen können der Absolutdruck $P_a$ und Differenzdruck $P_d$ entweder rechnerisch ermittelt werden oder auch in anderer geeigneter Weise, beispielsweise iterativ. Die Ermittlung von $P_a$ und $P_d$ anhand von $V_i$ und $V_o$ ist in Fig. 4 mit 20 gekennzeichnet. Die Verknüpfungen 18 und 19 sowie die Ermittlung von $P_a$ und $P_d$ in 20 erfolgt im vorliegenden Ausführungsbeispiel gemäß Fig. 4 durch eine elektronische Schaltung 21 digital, kann jedoch auch durch eine entsprechende Analogschaltung erfolgen.

Im vorstehend beschriebenen Ausführungsbeispiel wird in der Recheneinheit 20 ein Iterationsprozess durchgeführt, welcher die beiden vorgenanten Gleichungen (1) und (2) zugrunde legt. Dabei wird zunächst einmal davon ausgegangen, dass der Differenzdruck $P_d$ absolutdruckunabhängig ist. Der Differenzdruck $P_d$ wird dann anhand der Gleichung (1) ermittelt, wobei die Therme, welche den Absolutdruck umfassen, Null gesetzt werden. Mit dem so berechneten Differenzdruck $P_d$ wird dann mittels der Gleichung (2) der Absolutdruck $P_a$ ermittelt, indem der anhand von Gleichung (1) ermittelte Wert für $P_d$ in Gleichung (2) eingesetzt wird. Der so berechnete Absolutdruck $P_a$ wird wiederum in Gleichung (1) eingesetzt, um den Differenzdruck $P_d$ erneut zu ermitteln. Dieses geschieht so lange, bis die Abweichungen von $P_a$ bzw. $P_d$ dieser iterativen Annäherungen ein vorbestimmtes Maß unterschreiten.

Am Ausgang der elektronischen Schaltung 21 steht der so ermittelte Absolutdruck $P_a$ sowie der gleichzeitig ermittelte Differenzdruck $P_d$ in digitaler Form an. Bei einer Analogschaltung steht am Ausgang ein entsprechendes Spannungssignal an, welches zwei elektrische Anzeigeinstrumente ansteuert, von denen eines den Absolutdruck und das andere den Differenzdruck anzeigt.

Beim vorstehend beschriebenen Ausführungsbeispiel weist die Membran eine konstante Dicke aus und ist eben ausgebildet. Es kann jedoch auch vorteilhaft sein, um den Sensor für spezielle Einsatzzwecke anzupassen, die Membran beispielsweise partiell verstärkt auszubilden oder eine profilierte Membran bzw. eine Membran mit profilierter Oberfläche einzusetzen.

**Bezugszeichenliste**

1 - Substrat
2 - Membran
3 - Messwiderstände
4 - Kompensationswiderstände
5 - Leiterbahnen
6 - Erste innere Messbrücke
7 - Zweite äußere Messbrücke
8 - Aluminiumkontakte
9 - Sensorgehäuse
10 - O-Ringe
11 - Erste Öffnung im Sensorgehäuse
12 - Zweite Öffnung im Sensorgehäuse
13 - Dritte Öffnung im Sensorgehäuse
15 - Äußere Stirnseiten
16 - Innere Stirnseiten
17 - Stromquelle

18   - Subtraktive Verknüpfung
19   - Subtraktive Verknüpfung
20   - Algorithmus
21   - Elektronische Schaltung

**Patentansprüche**

1.   Differenzdrucksensor mit einem durch ein Halbleitersubstrat gebildeten Träger (1), das in einem inneren Bereich zu einer Membran (2) ausgedünnt ist, die beidseitig druckbeaufschlagbar ist, wobei innerhalb der Membran (2) Messwiderstände (3a bis 3d) zur Erfassung des an der Membran (2) anliegenden Differenzdrucks und am Träger (1) Kompensationswiderstände (4a bis 4d) ausgebildet sind, die mit den Messwiderständen (3a bis 3d) verschaltet sind, und die Messwiderstände (3a bis 3d) zu einer ersten Messbrücke (6) und die Kompensationswiderstände (4a bis 4d) zu einer zweiten Messbrücke (7) geschaltet sind, und wobei der Träger (1) eine innere und eine äußere Stirnseite (16 und 15) aufweist und die innere Stirnseite (16) mit dem an der einen Seite der Membran (2) anliegenden Druck ($P_1$) beaufschlagbar ist, **dadurch gekennzeichnet, dass** eine äußere Stirnseite (15) mit einem Druck ($P_3$) beaufschlagbar ist und dass eine elektronische Schaltung (21) vorgesehen ist, mit der anhand der an der zweiten Messbrücke (7) anliegenden Spannung ($V_o$) der Differenzdruck zwischen dem an der einen Seite der Membran (2) anliegenden Druck ($P_1$) und dem an der äußeren Stirnseite (15) des Trägers (1) anliegenden Druck ($P_3$) bestimmbar ist.

2.   Differenzdrucksensor nach Anspruch 1, **dadurch gekennzeichnet, dass** die Kompensationswiderstände (4a bis 4d) im Bereich der Membran (2) angeordnet sind.

3.   Differenzdrucksensor nach Anspruch 1 oder 2, **dadurch gekennzeichnet, dass** das Halbleitersubstrat (1) zweiseitig elastisch eingespannt ist, vorzugsweise zwischen zwei O-Ringen (10).

4.   Differenzdrucksensor nach Anspruch 3, **dadurch gekennzeichnet, dass** das Halbleitersubstrat (1) an seiner außerhalb der Einspannung liegenden äußeren Stirnseite (15) mit dem Umgebungsdruck ($P_3$) beaufschlagbar ist.

5.   Differenzdrucksensor nach Anspruch 3 oder 4, **dadurch gekennzeichnet, dass** die Kompensationswiderstände (4a bis 4d) außerhalb der Einspannung des Trägers (1) liegen.

6.   Differenzdrucksensor nach einem der vorhergehenden Ansprüche, **dadurch gekennzeichnet, dass** bei der Absolutdruckerfassung die Messwiderstände (3a bis 3d) als Kompensationswiderstände eingesetzt werden.

7.   Differenzdrucksensor nach einem der vorhergehenden Ansprüche, **dadurch gekennzeichnet, dass** die elektronische Schaltung (21) mindestens einen Datenausgang und/oder Anschluss für eine Druckanzeige aufweist.

8.   Differenzdrucksensor nach einem der vorhergehenden Ansprüche, **dadurch gekennzeichnet, dass** das Verhältnis zwischen Substratfläche und Membranfläche zwischen 3 und 30 beträgt, vorzugsweise bei 16 liegt.

9.   Differenzdrucksensor nach einem der vorhergehenden Ansprüche, **dadurch gekennzeichnet, dass** das Verhältnis zwischen Substratdicke und Dicke der Membran zwischen 10 und 200, vorzugsweise 25 beträgt.

10.  Differenzdrucksensor nach einem der vorhergehenden Ansprüche, **dadurch gekennzeichnet, dass** die Membran (2) profiliert oder mit unterschiedlicher Dicke ausgebildet ist.

**Claims**

1.   A differential pressure sensor with a carrier (1) which is formed by a semiconductor substrate and which in an inner region is thinned into a membrane (2) able to be impinged by pressure on both sides, wherein measurement resistances (3a to 3d) for detecting the differential pressure bearing on the membrane (2) are formed within the membrane (2), and compensation resistances (4a to 4d) are formed on the carrier (1) and are connected to the measurement resistances (3a to 3d), and the measurement resistances (3a to 3d) are connected into a first measurement bridge (6) and the compensation resistances (4a to 4d) into a second measurement bridge (7), and wherein the carrier (1) comprises an inner and an outer end-side (16 and 15) and the inner end-side (16) may be impinged

with the pressure ($P_1$) prevailing at the one side of the membrane (2), **characterised in that** an outer end-side (15) may be impinged with a pressure ($P_3$) and that an electronic circuit (21) is provided, with which the differential pressure between the pressure ($P_1$) bearing on the one side of the membrane (2) and the pressure ($P_3$) bearing on the outer end-side (15) of the carrier (1) may be determined by way of the voltage ($V_o$) prevailing at the second measurement bridge (7)

**2.** A differential pressure sensor according to claim 1, **characterised in that** the compensation resistances (4a to 4d) are arranged in the region of the membrane (2).

**3.** A differential pressure sensor according to claim 1 or 2, **characterised in that** the semiconductor substrate (1) is elastically fixed in on both sides, preferably between two O-rings (10).

**4.** A differential pressure sensor according to claim 3, **characterised in that** the semiconductor substrate (1), on its outer end-side (15) lying outside the fixation, may be impinged by the surrounding pressure ($P_3$).

**5.** A differential pressure sensor according to claim 3 or 4, **characterised in that** the compensation resistances (4a to 4d) lie outside the fixation of the carrier (1).

**6.** A differential pressure sensor according to one of the preceding claims, **characterised in that** with the detection of the absolute pressure, the measurement resistances (3a to 3d) are applied as compensation resistances.

**7.** A differential pressure sensor according to one of the preceding claims, **characterised in that** the electronic circuit (21) comprises at least one data output and/or connection for a pressure display.

**8.** A differential pressure sensor according to one of the preceding claims, **characterised in that** the ratio between the substrate area and the membrane area is between 3 and 30, preferably lies at 16.

**9.** A differential pressure sensor according to one of the preceding claims, **characterised in that** the ratio between the substrate thickness and the thickness of the membrane is between 10 and 200, preferably is 25.

**10.** A differential pressure sensor according to one of the preceding claims, **characterised in that** the membrane (2) is profiled or is designed with a different thickness.

## Revendications

**1.** Capteur de pression différentielle comprenant un support (1) formé par un substrat semi-conducteur qui est aminci dans une région intérieure pour former une membrane (2) pouvant être soumise à la pression des deux côtés, dans lequel sont conçues, à l'intérieur de la membrane (2), des résistances de mesure (3a à 3d) pour détecter la pression différentielle appliquée sur la membrane (2) et, sur le support (1), des résistances de compensation (4a à 4d) qui sont connectées aux résistances de mesure (3a à 3d), les résistances de mesure (3a à 3d) étant connectées à un premier pont de mesure (6) et les résistances de compensation (4a à 4d) à un second pont de mesure (7), et dans lequel le support (1) présente une face avant intérieure et une face avant extérieure (16 et 15) et la face avant intérieure (16) peut être soumise à la pression ($P_1$) appliquée sur l'une des faces de la membrane (2), **caractérisé en ce qu'**une face avant extérieure (15) peut être soumise à une pression ($P_3$) et **en ce qu'**est prévu un circuit électronique (21) permettant de déterminer, à partir de la tension ($V_o$) appliquée sur le deuxième pont de mesure (7), la pression différentielle entre la pression ($P_1$) appliquée sur une face de la membrane (2) et la pression ($P_3$) appliquée sur la face avant extérieure (15) du support (1).

**2.** Capteur de pression différentielle selon la revendication 1, **caractérisé en ce que** les résistances de compensation (4a à 4d) sont disposées dans la région de la membrane (2).

**3.** Capteur de pression différentielle selon la revendication 1 ou 2, **caractérisé en ce que** le substrat semi-conducteur (1) est encastré élastiquement des deux côtés, de préférence entre deux joints toriques (10).

**4.** Capteur de pression différentielle selon la revendication 3, **caractérisé en ce que** le substrat semi-conducteur (1) peut être soumis à la pression ambiante (P3) sur sa face avant extérieure (15) située à l'extérieur de l'encastrement.

**5.** Capteur de pression différentielle selon la revendication 3 ou 4, **caractérisé en ce que** les résistances de compensation (4a à 4d) sont situées à l'extérieur de l'encastrement du support (1).

**6.** Capteur de pression différentielle selon l'une des revendications précédentes, **caractérisé en ce que**, lors de la détection de pression absolue, les résistances de mesure (3a à 3d) sont utilisées en tant que résistances de compensation.

**7.** Capteur de pression différentielle selon l'une des revendications précédentes, **caractérisé en ce que** le circuit électronique (21) présente au moins une sortie de données et/ou une connexion pour un affichage de pression.

**8.** Capteur de pression différentielle selon l'une des revendications précédentes, **caractérisé en ce que** le rapport entre la surface du substrat et la surface de la membrane est compris entre 3 et 30 et se situe, de préférence, à 16.

**9.** Capteur de pression différentielle selon l'une des revendications précédentes, **caractérisé en ce que** le rapport entre l'épaisseur du substrat et l'épaisseur de la membrane est compris entre 10 et 200 et, de préférence, est égal à 25.

**10.** Capteur de pression différentielle selon l'une des revendications précédentes, **caractérisé en ce que** le la membrane (2) est profilée ou réalisée avec une épaisseur différenciée.

Fig. 1

Fig. 2

Fig. 3

$O_3$

$4a$

$O_1$

$4b$

$7$

$3a$

$3d$

$6$

$17$

$3b$

$3c$

$5$

$4d$

$4c$

$O_2$

$O_4$

Fig. 4

$O_1$

$O_2$

$18$

$v_i$

$21$

$20$

$p_a$

$O_3$

$O_4$

$19$

$v_o$

$p_d$

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19701055 A1
- EP 0083496 B1

- EP 0083496 A